# EUROPEAN PATENT APPLICATION

(11) **EP 4 035 526 A1**
(43) Date of publication of application: **03.08.2022**
(21) Application number: 22152577.7
(22) Date of filing: 20.01.2022
(51) Int. Cl.: A01K 1/00, A01K 1/01, A01K 61/70, A01K 31/22, A01K 1/015, A01K 61/60, A01G 31/04

(54) **MULTI-STOREY FIXED OFFSHORE PLATFORM FOR SEMI-EXTENSIVE AND/OR INTENSIVE FARMING OF FARM ANIMALS ON DRAINING HYDROPONIC / AEROPONIC ROTATIONAL PASTURES**

(30) Priority: 21.01.2021 IT 202100001034
(71) Applicant: Smartgrubs srlu, 70010 Valenzano Bari (IT)
(72) Inventor: Caprio, Francesco, 70010 Valenzano (Bari) (IT)
(74) Representative: De Tullio, Michele Elio

(57) **Abstract**

A platform (100) is provided with rearing areas (210), cultivation areas (220), and modules (310) for automated bioconversion and phytodepuration of the waste deriving from the activities carried out in said areas.

The platform is provided with transparent infill panels for climatic control and managing the air emissions deriving from the rearing and bioconversion activities and comprises multi-level rearing storeys (200) provided with a draining floor (211), grazings, and extensive hydroponic cultivations; said rearing storeys are also provided with under-floor tanks for deject collection and conveyance.

The platform is also provided with a raised storey (300) partially covering the rearing storey (200), provided with panel modules (320) for solar desalination and with units for an automated bioconversion for animal dejects and agricultural production waste by using dipteran larvae.

## Description

The present invention relates to the field of animal farming and closed cycle hydroponic cultivation systems.

More specifically, the present invention provides a fixed multi-storey offshore platform for a semi-extensive and/or intensive rearing of livestock on draining hydroponic/aeroponic rotational grazings, provided with rearing areas, cultivation areas, and modules for an automated bioconversion and phytodepuration of the waste deriving from the activities carried out in said areas; the platform is provided with transparent infill panels for climatic control and managing the aerial emissions deriving from the rearing and bioconversion activities.

### Present status of the art

The intensive rearing of livestock (pigs, sheep, cattle, poultries, etc.) and agriculture are consuming the natural resources of the Italian farmlands one time and half; the former alone use 39 % of the Italian agricultural resources just for compensating for the greenhouse gas emissions deriving from dejects and enteric fermentation of farmed animals.

Taken together, agriculture and zootechnics are unsustainable and create a deficit between supply and demand of natural resources, if we look at these processes through the ecological footprint indicator, which estimates this impact of a given sector with respect to the capacity of a territory of providing the necessary resources and absorbing the produced waste and emissions (biocapacity).

Whereas, until now, the regulations on the productions of pollutants focused their attention on energy production processes based on fossil fuels, the dramatic role played by the zootechnical industry clearly came out in the past twenty years.

In a study dating back to 2019, Tschofen et al. focused on the particulate pollution, i.e., the totality of small dimension substances dispersed in the atmosphere, which is the most frequent pollutant in urban areas today and includes Pm 2.5, which the Environmental Protection Agency (EPA) identified as the cause of 90 % of the 100,000 untimely deaths occurring every year in the United States of America because of atmospheric pollution.

Researchers calculated the ratio of the gross economic damage (Ged) to the added value (Av) for every production sector.

A Ged/Av ratio smaller than 1 indicates that the added value exceeds the caused damage; vice versa, whenever this ratio is greater than 1, it means that the damage exceeds the added value.

The mentioned study states that the Ged/Av ratio equals 0.72 for crop production companies and approximately 2 for intensive rearing companies and, amongst the latter, the poultry industry stands out with a ratio that ranges from 3 to 7.

This value is a proof of a highly polluting and harmful nature for economy and citizen health.

It is thus clear that finding sustainable solutions to these activities that are highly impactant for the surrounding territories is an urgent, absolutely priority challenge for the future of world food.

Floating or fixed platforms for an offshore cultivation of plants and rearing of animals are present in the status of the art; in particular, some patent documents pertaining to said application field are here mentioned.

Document CN109601453 discloses a zootechnical system together with an offshore floating-platform for fishes and animals supplied by wind energy; this system is formed of a farming platform comprising an upper surface formed of a plurality of upper buoys uniformly distributed on the perimeter and connected to each other two by two, by way of connection girders and a connection portion arranged in the middle of the surface, connected by box girders, and a lower surface formed of a plurality of lower buoys uniformly distributed on the perimeter and connected to each other two by two by way of connection girders and a connection portion arranged in the middle of the surface, connected by way of box girders; the number and positions of the upper buoys are identical to those of the lower buoys; each upper buoy is connected to its corresponding lower buoy by a connection pillar; wind generators and a lifting device are arranged on the upper buoys.

Patent document CN206284122U discloses an oceanic ecozone comprising an offshore platform provided with a bottom connected to a multi-storey frame structure, every layer of the frame structure includes more structures, the structure is supplemented with a component that allows animals to survive and plants to grow; the weight of the component gradually increases as frame structure depth increases, the peripheral areas of the platform are connected to the above-the-water structure; the multi-storey framed structure rests on the bottom of the sea platform, and both animals and mixed culture plants can be set and protected at every level; a level can also be provided on which an artificial coral reef is set.

Document CN108207607 discloses an offshore eco-friendly agricultural plant comprising a plurality of devices of the plant and a biogas fermentation device; each device of the plant comprises a plurality of regions, which define pre-determined spaces therebetween reserved for cultivation of aquatic plants arranged in correspondence with the empty spaces existing between adjacent regions; the biogas fermentation device is in communication with the various regions of the plant via ducts; the eco-friendly agricultural plant makes it possible to exploit neritic coastal regions, thus preventing major ecological damages that might take place thereon.

It comes out from the present status of the art that techniques are presently known for an offshore fish farming, whereas no technical solutions are apparently known for an offshore poultry, pig, sheep-goat, or cattle rearing, nor any technical solutions that comprise an integrated cycle for producing all raw materials necessary for said rearing facilities nor, least of all, a system that also supplements said productions with a possibility of transforming the organic waste deriving from these productions into new raw materials.

### Summary of the invention

The present invention provides a fixed multi-storey offshore platform for a semi-extensive and/or intensive rearing of livestock on draining hydroponic/aeroponic rotational grazings, provided with rearing areas, cultivation areas, and modules for an automated bioconversion and phytodepuration of the waste deriving from the activities carried out in said areas.

The platform is provided with transparent infill panels, for climatic control and managing the air emissions deriving from the rearing and bioconversion activities and comprises multi-level rearing storeys provided with a draining floor, grazings, and extensive hydroponic cultivations; said rearing storeys are also provided with under-floor tanks for deject collection and conveyance.

The platform is also provided with a raised storey used to partially cover the rearing storey, provided with panel modules for solar desalination, and automated bioconversion units using dipteran larvae for animal dejects and the agricultural production waste.

### Brief description of the figures

The fixed offshore platform for a semi-extensive and/or intensive rearing of livestock on draining hydroponic grazings according to the present invention is described below with reference to one preferred, but not exclusive, embodiment thereof, which is illustrated for explanatory, non-limitative purposes only, and with a special reference to the attached figures, wherein:
figure 1 is an axonometric view of a platform according to this invention provided with two storeys reserved for rearing and hydroponic cultivation and one storey reserved for sea water desalination and bioconversion of all organic waste deriving from the activities taking place in the storeys placed below;
figure 2 is a longitudinal cross-sectional view of the platform of figure 1;
figure 3 is an axonometric view of a rearing area, provided with conveyor belts, of the platform of the previous figures;
figure 4 is a detail of the rearing area of figure 3;
figure 5 is an axonometric view of a draining footboard of a rearing area of the platform;
figure 6 is a cross-sectional view of the draining footboard of figure 5.

### Detailed description of the invention

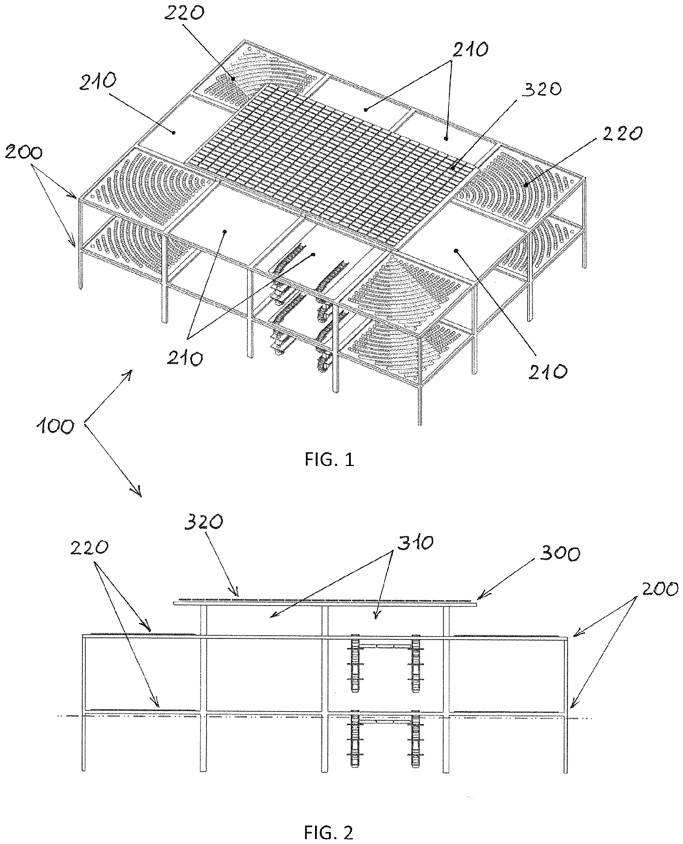

Figures 1 and 2 show the structure of a fixed multi-storey offshore platform according to the present invention.

More specifically, figures 1 and 2 show a platform 100 comprising two storeys 200 reserved for rearing and hydroponic cultivation, and one storey 300 reserved for bioconversion of all organic waste deriving from the activities taking place in the storeys placed below and for sea water desalination.

Said rearing storeys used for hydroponic cultivation and bioconversion of the produced organic waste are placed alternate to each other and at multiple levels.

As shown in figure 1, every storey 200 reserved for rearing and hydroponic cultivation comprises rearing areas 210 and hydroponic cultivation areas 220, overhung by a further storey 300 provided with bioconversion areas and panels for sea water desalination, which can also be used for creating a necessary shadow and shelter for the animal species reared in the areas below.

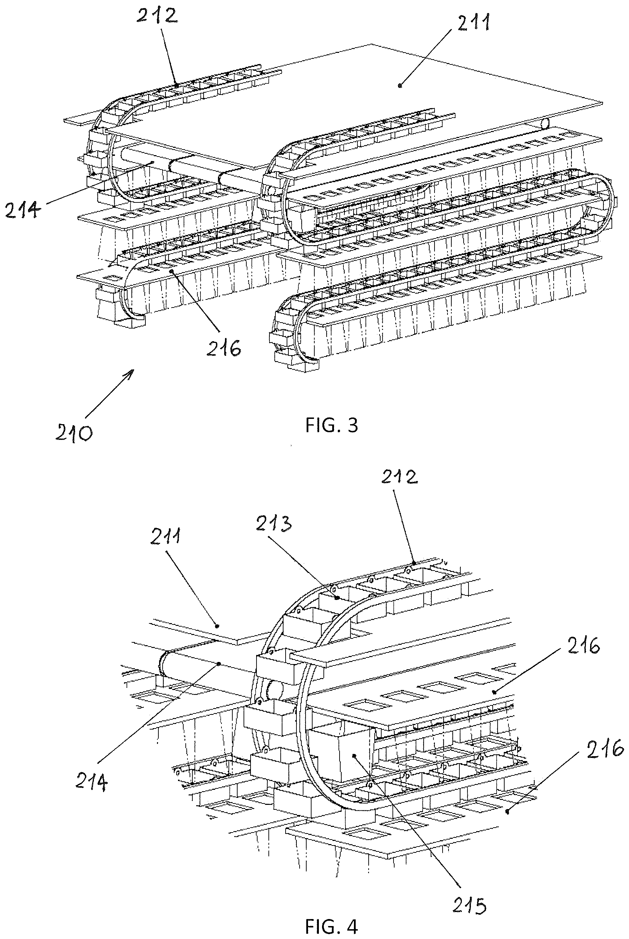

Figure 3 shows, in details, a rearing area 210 of the storey 200 of the platform, provided with a footboard 211 and laterally with chain conveyors 212 provided with grazing tanks 213.

A waste conveyor belt 214, or a scraper (not shown in the figures), a charging hopper 215, and a set of led lighting panels 216 are located below the footboard 211.

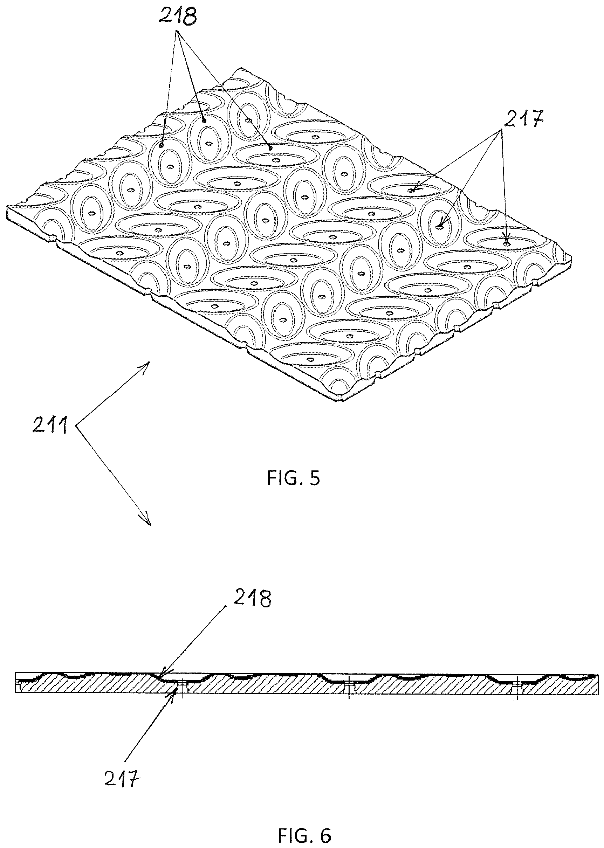

Figures 5 and 6 are an axonometric view and a cross-sectional view respectively of a preferred embodiment of a draining footboard 211 of a rearing area 210 of the platform, in the case that the latter is used for poultry rearing purposes.

The footboard 211 of every area 210 features a draining floor optimized for every species reared therein, whose morphology prevents dejects from accumulating thereon, while allowing the same to be extruded in the direction to the storey underneath, thanks to the continual trampling produced by animals, through appropriate holes 217.

Said surface preferably includes adjacent depressions 218 spread all over the surface of the rearing storey.

The mentioned depressions 218 will be anatomically compatible with the footprints of the animal species reared and all projecting portions of the surface will be smoothed to let claws fit the depressions without causing injuries.

For example, if poultry and rabbit species are to be reared, said floor will be provided with slots for development of a hydroponic/aeroponic grazing starting from soilless beds placed immediately below said slots, alternating to draining slots that allow the dejects produced by the reared animals to pass through down to the storey below, where conveyance and solid-liquid separation take place.

Waste conveyance and solid-liquid separation take place in the storey placed immediately below the footboard 211 via a conveyor belt 214.

Dejects, after being thus split into their solid and liquid portions respectively, are treated differently from each other.

The solid portion will be conveyed to a distribution system, which will feed bioconversion tanks by way of saprophagous insects being in a larval stage, which, handled by appropriate driving mechanisms, will be charged every day with an amount of solid dejects, proportional to the development stage of the larvae inserted inside said tanks, with treatment cycles whose duration is shorter than or equal to the typical larval development cycle of the insect used, and stored in warehouses featuring a vertical development at a controlled temperature (plants not described in the present patent application).

Conversely, the liquid portion of dejects will be forced to cross phytodepuration tanks in which one or several species of edible aquatic plants will be placed, thanks to the implementation of given nitrificant bacterial species (such as, for example, *Nitrobacter* and *Nitrosomonas*), spread on high capillarity inert substrates, properly supported by an appropriate forced oxygenation.

Water, still full of minerals and properly enriched with any missing nutrients, will be routed to the mentioned hydroponic/aeroponic grazing systems.

Said hydroponic or aeroponic grazings will be partitioned according to rotational logics and used to feed the reared species according to said logics, typical of semi-extensive rearing.

On the contrary, when said offshore platforms are used to rear species of ungulates, whose hooves could prevent an appropriate development of the mentioned hydroponic or aeroponic grazings, overhead troughs, served by multi-tray handling systems, will be implemented.

The hydroponic grazings implement the technology of chain conveyors 212, commonly adopted in handling, and are used to provide a mobile hydroponic cultivation surface, thanks to which the reared animals will have a constant grazing area at their disposal, i.e. a grazing characterized in always being at the desired development stage.

Said cultivation is implemented by moving the grazing tanks 213 below lighting panels 216, which allow for an indoor development of the desired vegetation, in a closed cycle in which the grazing surface that is ready is moved every day in order for it to be brought to the rearing storey and the exhausted portion is moved toward a washing area, where the identified cultures are subsequently recharged.

The platform is provided with multiple levels, the number of which will be calculated in order to have the same amount of grazing available at the best development stage every day.

Said systems can be regarded as vertical grazings, in which species of fast-growing plants typical to grazings, such as for example oats and other graminaceous plants, are cultivated at a controlled temperature on hydroponic or aeroponic trays properly lighted by leds and/or by the sun light.

Once an appropriate development is reached, the contents of said trays, consisting of turfs in which both sprouts and root systems of said grazing species are present, will be moved and put at disposal of the reared species.

The highest rearing surface will be overhung by a further storey 300 provided with a bioconversion area 310 and sea water desalination panels 320, which is also used for creating the necessary shadow and shelter for said reared species.

Said desalinator panels 310 will be used for creating drinkable water, which will be used both for watering said reared species and for the hydroponic/aeroponic cultures. The offshore platform possibly comprises a surface dedicated to an extensive hydroponic/aeroponic cultivation, with or without greenhouses, for producing edible plants (such as, for example, vegetables, arboreal, and fodder species).

Said surface will feature a draining floor, through which the aerial parts of said cultivations will develop, below which aeroponic or hydroponic systems will be implemented, in which the root portions of said plants can properly develop, possibly at a controlled temperature, not further described in this patent application document. The submerged portion of said offshore platform possibly comprises an area, surrounded by nets properly developed for rearing fish species, in which said species can be reared.

The scope of this invention is susceptible of numerous modifications and variants, all falling within the inventive concept set forth in the attached claims.

All details can be replaced by other technically equivalent elements depending on the actual requirements, without departing from the scope of protection of the present invention.

Even though the scope has been described with a special reference to the attached figures, the reference numerals used in the description and in the claims are used for improving the understanding of the invention and do not constitute any limitations to the claimed scope of protection.

## Claims

1. A fixed multi-storey offshore platform for semi-extensive and/or intensive rearing of livestock on draining hydroponic/aeroponic rotational grazings, comprising at least one storey (200) provided with rearing areas (210) and cultivation areas (220), **characterized in that** it is provided with modules (310) for automated bioconversion and phytodepuration of the waste deriving from the activities carried out in said areas (210, 220), **and in that** said areas (210, 220) are provided with transparent infill panels, which allow for climatic control and managing the air emissions deriving from the rearing and cultivation activities, and are overhung by a further raised storey (300), to provide a partial covering, provided with panel modules (320) for solar sea water desalination.

2. The offshore platform according to claim 1, **characterized in that** the rearing area (210) of the storey (200) is provided with a footboard (211) laterally comprising chain conveyors (212) provided with grazing tanks (213) and a waste conveyor belt (214) below, or alternatively a waste scraper, a charging hopper (215), and a set of led lighting panels (216).

3. The offshore platform according to claim 2, **characterized in that** the footboard (211) of every rearing area (210) is a draining floor provided with depressions (218) adjacent to each other and spread all over the surface and with appropriate draining holes (217).

4. The offshore platform according to claim 3, **characterized in that** the depressions (218) of the footboard (211) are anatomically compatible with the footprints of the animal species reared and all projecting portions of the surface are smoothed in order to let hooves fit the depressions without causing injuries.

5. The offshore platform according to claim 1, **characterized in that** the areas (310) comprise tanks for an automated bioconversion of animal dejects and agricultural production waste of the areas (210, 220), by way of saprophagous insects being in a larval stage, handled by appropriate driving mechanisms, charged with an amount of dejects/solid waste proportional to the development stage of the larvae inserted inside said tanks, with treatment cycles having a duration shorter than or equal to the larval development cycle typical to the insect used, and stored in warehouses featuring a vertical development at a controlled temperature.

6. The offshore platform according to claim 1, **characterized in that** the areas (310) comprise phytodepuration tanks for being forcedly crossed by the liquid portion of animal dejects and agricultural production waste of the areas (210, 220), provided with nitrificant bacterial species, such as for example Nitrobacter and Nitrosomonas, spread on high capillarity inert substrates, properly supported by an appropriate forced oxygenation, and in which one or several edible aquatic plants species are placed.

7. The offshore platform according to any of the previous claims, **characterized in that** the submerged portion thereof includes an area, surrounded by nets properly developed for rearing fish species.

8. The offshore platform according to any of the previous claims, **characterized in that** the rearing areas (210) are provided with a cultivation surface, which is movable thanks to the chain conveyors technology, are implemented according to vertical rotational logics and are continually made available to the reared species as food according to said logics typical to semi-extensive rearing, so as to provide permanently green grazing areas without any need for moving the reared animals.

9. The offshore platform according to claim 8, **characterized in that** the movable cultivation surface is implemented by moving the grazing tanks (213) below lighting panels (216), thus allowing an indoor development of a desired vegetation, in a closed cycle in which the grazing area that is ready is moved every day in order for it to be brought to the rearing storey and the exhausted portion is moved to a washing area, where the identified cultures are then recharged.

10. The offshore platform according to any of the previous claims, **characterized in that** it is provided with multiple stacked levels, so as to form vertical grazings, internally to which species of fast developing plants typical to grazings, such as, for example, oats and other graminaceous plants, are cultivated, at a controlled temperature, on hydroponic or aeroponic trays, properly lighted by leds and/or by the sun light.
